# EUROPEAN PATENT APPLICATION

(11) **EP 2 819 340 A1**
(43) Date of publication of application: **31.12.2014**
(21) Application number: 13461534.3
(22) Date of filing: 26.06.2013
(51) Int. Cl.: H04L 7/04

(54) **A method for receiving a signal comprising frames, a signal receiver and a signal comprising frames**

(71) Applicant: Profil Met Sp. J. Jasinski, Leiter, 41-709 Ruda Slaska (PL); Akademia Gorniczo-Hutnicza im. Stanislawa Staszica w Krakowie, 30-059 Krakow (PL)
(72) Inventor: Ochman, Ukasz, 41-600 Wi Toch Owice (PL); Kowalik, Aleksandra, 41-902 Bytom (PL); P achetka, Joanna, 40-657 Katowice (PL)
(74) Representative: Pawlowski, Adam

(57) **Abstract**

A signal comprising frames having a synchronization block and a data block, characterized in that the synchronization block comprises at least three predetermined synchronization words, wherein the last synchronization word (S2) is different from the preceding synchronization words (S1).

## Description

The present invention relates in general to synchronization in a communication network wherein signals with frames are received.

In digital transmission systems it is necessary to synchronize a receiver with the incoming digital signal. In carrier systems, information is transmitted in frames and synchronization is realized by properly locating the frames by a process called framing, in which the transmitting end and the receiving end recognize the same frame boundaries, i.e. recognize the same first bit of a frame through the same last bit of the frame.

A typical frame comprises a preamble block, a synchronization block and a data block. The preamble typically comprises a set of interleaved 0s and 1s and is used to tune the receiver with the transmitter. The synchronization block typically comprises a unique synchronization word, which the receiver seeks in the received signal - once a synchronization word is detected, it indicates that the following bits relate to a data block, which is received and further processed by the receiver.

A US patent US4156867 discloses a data communication system for use in the control and monitoring of mobile stations, for example, in a bus monitoring system, from a central station over a communication channel carrying both data and voice information. Information is encoded into digital messages having a start code followed by one or more data blocks. The start code identifies the beginning of the data block that follows and enables synchronization of clock circuitry to the received data frequency. The data blocks have N digital words with M binary bits where one word is a parity word and N-1 words are data words. Each of the data words has a data portion and parity portion coded for correction of at least one error. Reliability is enhanced by a data detector which discriminates between data and noise or voice to provide an indication of the presence of data. In transmitting the digital messages, the bits of the N words in each data block are interleaved to provide protection against error bursts.

A US patent US5493571 discloses a node circuit is operative to couple Manchester encoded data between a transmission medium and an associated electrical device. A first mechanism detects a message frame preamble having a pattern of alternating signal level of substantially identical duration, and a second mechanism that detects a start delimiter in the message frame. The start delimiter has a plurality of binary signal levels in a unique pattern that satisfies a defined set of criteria to optimize the probability that the pattern will be detected while minimizing the likelihood that random valid data will alias into the start delimiter pattern. A data decoder is provided to convert the Manchester encoded data into binary data which then is sent via a signal path to the associated electrical device. Another mechanism is included to detect a unique end delimiter that signals the termination of the message frame.

In case of noisy communication channels, there exist two main communication problems: a problem of packet loss and a problem of invalid packet detection. Packet loss occurs when the synchronization word is disrupted and the receiver does not recognize it as a valid synchronization word - then, the data following the synchronization word are not read by the receiver and only the next packet is received, provided it carries an undisrupted synchronization word. Invalid packet detection occurs when the noise introduced to the signal causes a fragment of a data field to be changed such that it resembles a synchronization word - then, data following this fragment are received as supposedly valid data field and only after full reception of the field the receiver can realize that the data is invalid.

Such situation further leads to a loss of the following data packet, the beginning of which was considered to form of the previously invalidly detected packet. Due to the fact that data fields typically constitute the major part of the packet (in some communication systems, even 99% of the packet), packet loss may lead to severe derogation of transmission quality.

In order to decrease the number of lost packets, techniques have been developed to allow error correction of synchronization words. However, although this leads to a smaller number of packets lost due to disruption of the codeword, it increases the number of invalidly detected frames.

The object of the present invention is a signal comprising frames having a synchronization block and a data block, **characterized in that** the synchronization block comprises at least three predetermined synchronization words, wherein the last synchronization word is different from the preceding synchronization words.

Preferably, the synchronization words preceding the last synchronization word are the same.

Preferably, the synchronization words preceding the last synchronization word are different from each other.

Preferably, the synchronization words preceding the last synchronization word are interleaved with preamble words.

Preferably, at least one of the synchronization words (S1, S2) comprises error-correction redundancy data.

Another object of the present invention is a method for receiving a signal with frames by detecting a synchronization block to determine the start of a data block, characterized by monitoring the signal until a synchronization word of a first type is detected; monitoring the signal further and: upon detecting a synchronization word of a predetermined similarity to the synchronization word of the first type, continuing monitoring the signal further, upon detecting a synchronization word of a predetermined similarity to the synchronization word of a second type, receiving the following signal contents as a data block, upon detecting other data, resuming the procedure to monitor the signal until a synchronization word of a predetermined similarity to the synchronization word of a first type is detected.

The object of the invention is also a signal receiver comprising a receiver configured to receive input signal and to detect frames of the signal by detecting a synchronization word, **characterized in that** it further comprises a controller configured to: upon detecting a synchronization word of a predetermined similarity to the synchronization word of the first type, continuing monitoring the signal further, upon detecting a synchronization word of a predetermined similarity to the synchronization word of a second type, outputting the following signal contents as a data block to a data processor, upon detecting other data, restarting the signal receiver to monitor the signal until a synchronization word of a predetermined similarity to the synchronization word of a first type is detected.

The object of the invention is also a computer program comprising program code means for performing all the steps of the computer-implemented method according to the invention when said program is run on a computer, as well as a computer readable medium storing computer-executable instructions performing all the steps of the computer-implemented method according the invention when executed on a computer.

The use of the present invention allows to decrease the number of lost frames, decrease the number of frames identified incorrectly as valid frames. This allows higher speeds of communication or increase of range of radio communication systems.

The present invention is shown by means of exemplary embodiments on a drawing, in which:
Figs. 1A-1C present exemplary embodiments of a frame of a signal according to the present invention;
Fig. 2 presents a method for receiving the signal according to the present invention;
Fig. 3 presents an exemplary embodiment of a signal receiver according to the present invention.

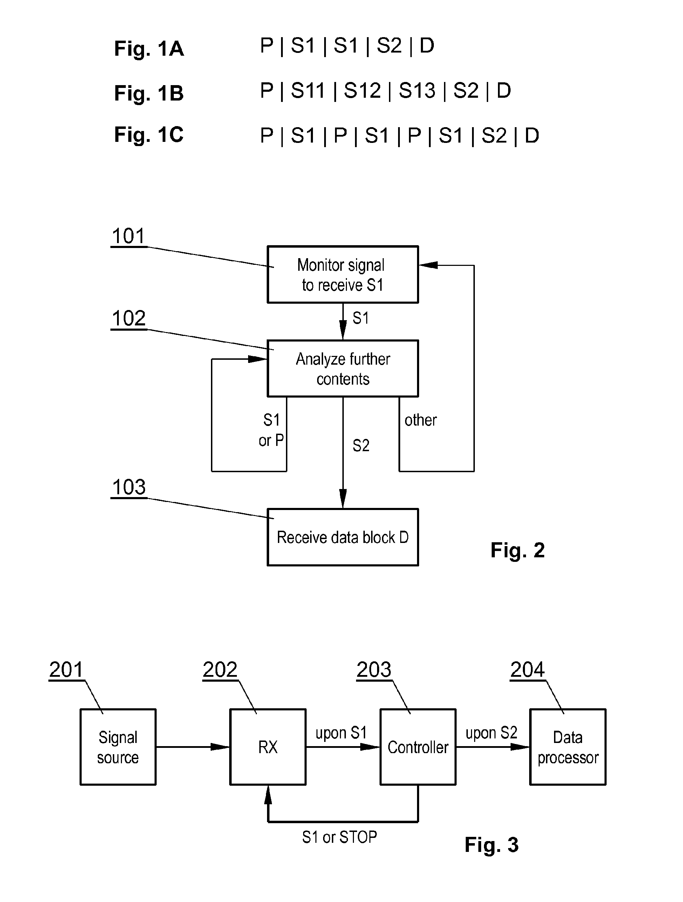

Fig. 1A presents a first, basic embodiment of a frame of a signal according to the present invention. The frame comprises a preamble P followed by two synchronization words of a first type, being the same words S1, and one synchronization word of a second type S2, followed by a data block D. The preamble block P and the data block D are conventional and adapted to the needs of the particular communication network.

Fig. 1B presents a second embodiment of a frame of a signal according to the present invention. The frame comprises a preamble P followed by three synchronization words of a first type, which may differ from each other, S11, S12, S13, and one synchronization word of a second type S2, followed by a data block D.

Fig. 1C presents a third embodiment of a frame of a signal according to the present invention. The frame comprises a plurality of sets of a preamble P followed by a synchronization word of a first type S1, which are followed by one synchronization word of a second type S2, followed by a data block D. In other words, one of the synchronization words of the first type S1 may be a preamble P.

Therefore the synchronization word of a second type S2 is in other words ending a synchronization sequence wherein the synchronization sequence comprises at least three words of at least three different types, namely a preamble, one or more words of a first or more types types (except for second type), one ending word of the second type wherein the word of the second type is different than the words of any other type.

In general, the synchronization block of the frame of the signal according to the present invention, the synchronization block being located between the preamble P and the data block D, comprises at least three predetermined synchronization words, wherein the last synchronization word S2 is different from the preceding synchronization words S1. The synchronization words of the first type S1, S11, S12, S13 may be interleaved with preamble words P. Moreover, the synchronization words S1, S11, S12, S13, S2 may comprise error-correction redundancy data.

The use of the signal will be explained with reference to Fig. 2, which shows the method for receiving the signal. First, in step 101, the signal is monitored until a synchronization word of the first type S1 is detected. The reception of each synchronization word is typically done bit by bit until a complete word has been retrieved from the source signal.

In case a synchronization word of the first type S1 is detected, the signal is further monitored in step 102 to detect the subsequent signal contents. In case the subsequent contents form a synchronization word of the first type S1 or the preamble P, it indicates that the currently received portion of the signal is the synchronization block and the method returns to step 102.

In another embodiment it may be allowed that the retrieved synchronization word is sufficiently similar to S1 or P, i.e. has a predetermined similarity to S1 or P. Because of using repetitive S1 or P synchronization words one may seek its first occurrence more rigorously than its subsequent occurrences in the source signal. For example, in case of 16-bit synchronization words a first occurrence of S1 must be exact, while the second occurrence of S1 is assumed when 15 of the 16 bits of the received word are the same as in S1. Similarly in another example in case of 16-bit synchronization words a first occurrence of S1 is assumed when 15 of the 16 bits of the received word are the same as in S1 and a subsequent occurrence of S1 is assumed when 14 of the 16 bits of the received word are the same as in S1. One skilled in the art will also be aware that similar assumptions may be applied to P and S2 words even though S2 is not a repetitive word within a synchronization sequence.

In case no deviation from S1, S2 or P is allowed, the predetermined similarity is set to 100%, i.e. the words have to be the same.

In case the following contents form a synchronization word of the second type S2 it indicates the end of the synchronization block and the procedure moves to step 103 to receive the following contents as the data block D. In case the following contents form content different from P, S1 and S2, it indicates that the synchronization word of the first type S1 detected in step 101 was received erroneously or that there is an error in the currently received portion - in that case, the procedure returns to step 101 to monitor the signal for occurrence of synchronization word of the first type S1.

Alternatively, in steps 101, 102 instead of detecting a single word S1 of the first type, the method may be configured to detect one of a plurality of words S11, S12, S13 of the first type. The words S11, S12, S13 may have some common properties, such as the same length, a similar pattern, a similar error-correction redundancy data. Alternatively, they may share no common features and in that case the term "first type" is used to distinguish them from the last word of the "second type".

The signal structure thus requires at least three synchronization words, including two words of the first type S1 and one word of the second type S2. By utilizing a plurality of words of the first type it is ensured that even if one (but not the last) of these words is corrupted by noise, the other words can still be detected and the frame is not lost due to unrecognized synchronization word. In turn, by allowing to receive the data block D only after synchronization S2 follows synchronization word S1, the number of packets identified incorrectly is decreased. For noisy channels, the reliability of communication can be increased by incorporating error-correction redundancy data into the synchronization words, for example allowing 1 bit of the word to be corrupted.

Fig. 3 presents an exemplary embodiment of a signal receiver according to the present invention. A signal source 201, such as a radio antenna or a wired network interface, provides the signal for reception by a receiver (or a transceiver) 202. The receiver 202 may be a receiver of a conventional type, adapted to detect a synchronization word S1 which is set by the controller 203. The conventional receiver 202 is configured to output signal data upon detecting the word S1. In conventional systems, the data from the receiver would be fed directly to the data processor 204 as data block D. In the present invention, the controller 203 coordinates the signal reception according to the method of Fig. 2. It collects data output from the receiver 202 and determines whether the following contents are the preamble P, the synchronization word of the first type S1 or of the second type S2. In case of detecting P or S1, it continues to monitor further signal contents. In case of detecting S2, it forwards the following data to the data processor 204 as the data block D. In case of detecting contents different from P, S1 and S2, it sends a "STOP" command to the receiver 202 in order for the receiver 202 to stop transmitting data and to monitor the signal until a next occurrence of the synchronization word S1 of the first type is found. The functionality of the controller 203 may be embedded in a single circuit with the data processor 204 in case when conventional receiver is to be used. Alternatively, the functionality of the controller 203 may be embedded in a single circuit with the receiver 202 in case a new type of receiver is designed.

It can be easily recognized, by one skilled in the art, that the aforementioned method for receiving a signal may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A signal comprising frames having a synchronization block and a data block, **characterized in that** the synchronization block comprises at least three predetermined synchronization words, wherein the last synchronization word (S2) is different from the preceding synchronization words (S1).

2. The signal according to claim 1, **characterized in that** the synchronization words (S1) preceding the last synchronization word (S2) are the same.

3. The signal according to claim 2, **characterized in that** the synchronization words (S11, S12, S13) preceding the last synchronization word (S2) are different from each other.

4. The signal according to claim 2, **characterized in that** the synchronization words (S1) preceding the last synchronization word (S2) are interleaved with preamble words.

5. The signal according to claim 2, **characterized in that** at least one of the synchronization words (S1, S2) comprises error-correction redundancy data.

6. A method for receiving a signal with frames by detecting a synchronization block to determine the start of a data block (D), **characterized by**:
- monitoring the signal until a synchronization word of a first type (S1) is detected;
- monitoring the signal further and:
- upon detecting a synchronization word of a predetermined similarity to the synchronization word of the first type (S1), continuing monitoring the signal further,
- upon detecting a synchronization word of a predetermined similarity to the synchronization word of a second type (S2), receiving the following signal contents as a data block (D),
- upon detecting other data, resuming the procedure to monitor the signal until a synchronization word of a predetermined similarity to the synchronization word of a first type (S1) is detected.

7. A signal receiver comprising a receiver (202) configured to receive input signal and to detect frames of the signal by detecting a synchronization word (S1), **characterized in that** it further comprises a controller (203) configured to:
- upon detecting a synchronization word of a predetermined similarity to the synchronization word of the first type (S1), continuing monitoring the signal further,
- upon detecting a synchronization word of a predetermined similarity to the synchronization word of a second type (S2), outputting the following signal contents as a data block (D) to a data processor (204),
- upon detecting other data, restarting the signal receiver (202) to monitor the signal until a synchronization word of a predetermined similarity to the synchronization word of a first type (S1) is detected.

8. A computer program comprising program code means for performing all the steps of the computer-implemented method according to any of claims 6 when said program is run on a computer.

9. A computer readable medium storing computer-executable instructions performing all the steps of the computer-implemented method according to any of claims 6 when executed on a computer.
